# EUROPEAN PATENT APPLICATION

(11) **EP 4 726 210 A1**
(43) Date of publication of application: **15.04.2026**
(21) Application number: 24205271.0
(22) Date of filing: 08.10.2024
(51) Int. Cl.: F04B 35/00, F04B 39/00, F04B 39/12, F02B 63/06, F16F 15/02

(54) **BALANCING OF A COMPRESSOR-ENGINE ASSEMBLY**

(71) Applicant: Koenigsegg Automotive AB, 262 74 Ängelholm (SE)
(72) Inventor: von KOENIGSEGG, Christian, 266 54 VEJBYSTRAND (SE)
(74) Representative: Brann AB

(57) **Abstract**

A compressor-engine assembly (302) comprising a compressor (10) and a reciprocating engine (304), wherein the compressor (10) is arranged to be powered by the engine (304). The engine (304) has an engine imbalance when operating, and the compressor (10) has a compressor imbalance when operating, the compressor imbalance at least partly mitigating the engine imbalance.

## Description

### TECHNICAL FIELD

The proposed technology generally relates to the field of engine balancing, and specifically to the balancing of engines that power a compressor.

### BACKGROUND

It is known to power compressors using reciprocating engines. Reciprocating engines has moving parts that cause vibrations. Engine balancing refers to how the inertial forces produced by the moving parts are counteracted. The strongest inertial forces occur at the frequency of crankshaft rotation. The corresponding primary imbalances are typically countered by counterweights on the crankshaft of the engine. There are also inertial forces at the double frequency of the crankshaft rotations. The corresponding secondary imbalances are typically countered by engine balance shafts rotating at twice the rate of the crankshaft.

A straight engine, or inline engine, has several cylinders arranged in a row. A straight engine with an odd number of cylinders typically has an imbalance resulting in a couple when operating, even with an engine balance shaft present. A couple is generally understood as a system of forces that has no resultant force but a resultant moment.

### SUMMARY

An object of the proposed technology is to counteract or mitigate vibrations or an imbalance of a reciprocating engine that powers a compressor. A specific object is to counteract or mitigate vibrations or an imbalance of a straight engine having an odd number of cylinders.

In a first aspect of the proposed technology, a compressor-engine assembly comprises: a compressor, and a reciprocating engine, or piston engine. The compressor is arranged to be powered, or driven, by the engine. The engine causes vibrations when operating, and the compressor is arranged to counteract, or mitigate, the vibrations of the engine. Worded differently, the engine has an imbalance when operating, and the compressor is arranged to at least partly cancel, or reduce, the imbalance. More specifically, the engine has an engine imbalance when operating, the compressor has a compressor imbalance when operating, and the compressor is arranged with the compressor imbalance at least partly cancelling, or mitigating, the engine imbalance.

It is understood that the reciprocating engine is an internal combustion engine. The engine may have pneumatically powered, or operated, engine valves, and the compressor, or the outlet of the compressor, may be operationally coupled, or fluidly connected, to the engine valves to supply the engine valves with pressurized gas, or air.

In a second aspect of the proposed technology, a vehicle comprises: a compressor-engine assembly according to the first aspect of the proposed technology. For example, the vehicle may be a car, truck, airplane, or boat. It is understood that the engine may be arranged to power, or drive, the vehicle.

It is understood that the compressor may be a positive-displacement reciprocating compressor. The compressor may be a non-variable displacement compressor, or fixed displacement compressor. It is understood that that the compressor may be an air compressor. The compressor may be a single acting compressor. The compressor may be a single stage compressor.

The compressor may have, or comprise, a compressor piston. Worded differently, the compressor may be a piston compressor. It is understood that the compressor may have, or comprise, a compressor cylinder. It is understood that the compressor piston is located in the compressor cylinders. It is further understood that the compressor cylinder and the compressor piston jointly form a compression chamber arranged to compress gas, or air, when operating the compressor. It is further understood that the compressor may comprise an inlet valve and an outlet valve, wherein the inlet valve may be a check valve arranged to allow gas to enter, or to allow an inflow of gas into, the compression chamber, and the outlet valve may be a check valve arranged to allow gas to exit, or to allow an outflow of gas from, the compression chamber.

The compressor may be a single cylinder compressor, or single piston compressor. This means that the compressor cylinder is the only cylinder of the compressor, or the compressor piston is the only piston of the compressor.

It is understood that the compressor piston may have a bottom dead center and a top dead center. The bottom dead center is the bottommost position of the compressor piston relative to the compressor cylinder, or to the compressor crankshaft described below. The top dead center is the topmost position of the compressor piston relative to the compressor cylinder, or to the compressor crankshaft described below. It is further understood that the compressor piston may have a stroke length. The stroke length is the distance the compressor piston travels between in a full stroke, or between the bottom dead center and the top dead center. It is understood that the compressor piston can perform a compression stroke within the compressor cylinder corresponding to a change in position of the compressor piston from the bottom dead center to the top dead center.

It is specified that the compressor cylinder and the compressor piston may jointly form a compression chamber. It is understood that the compression chamber has a volume that changes when the compressor is operated. It is further understood that the volume of the compression chamber is the largest at the bottom dead center and the smallest at the top dead center.

It is understood that a valve can be open or closed, and that passage through the valve is allowed when the valve is open and prevented when the valve is closed. A check valve is understood as a valve that normally allows passage of a fluid, such as gas, in only one direction. These valves are also called non-return valves or one-way valves.

It is understood that the inlet valve is fluidly connected to the compression chamber. It is specified that the inlet valve may be a check valve arranged to allow gas to enter the compression chamber. It is further understood that the inlet valve may be arranged to open and allow gas to enter the compressor cylinder at a transition from the top dead center to the bottom dead center, at an increase of the volume of the compression chamber, or at lower pressure in the compressor cylinder, or compression chamber, than outside of the inlet valve. It is further understood that the inlet valve may be arranged to close and prevent gas to exit the compressor cylinder at a transition from the bottom dead center to the top dead center, at a decrease of the volume of the compression chamber, or at higher pressure in the compressor cylinder, or compression chamber, than outside of the inlet valve.

It is understood that the outlet valve is fluidly connected to the compression chamber. It is specified that the outlet valve may be a check valve arranged to allow gas to exit the compression chamber. It is further understood that the outlet valve may be arranged to open and allow gas to exit the compressor cylinder at a transition from the bottom dead center to the top dead center, at a decrease of the volume of the compression chamber, or at a higher pressure in the compressor cylinder, or compression chamber, than outside outlet valve. It is further understood that the outlet valve may be arranged to close and prevent gas to enter the compressor cylinder at a transition from the top dead center to the bottom dead center, at an increase of the volume of the compression chamber, or at a lower pressure in the compressor cylinder, or compression chamber, than outside outlet valve.

The compressor cylinder is understood be a structural part of the compressor. The compressor cylinder may have a cylinder head. It is understood that the cylinder head contributes to enclose the compression chamber. It is further understood that that the compressor piston moves towards the cylinder head at a transition from the bottom dead center to the top dead center, and that the compressor piston moves away from the cylinder head at a transition from the top dead center to the bottom dead center. The inlet valve may be located at the cylinder head. Similarly, the outlet valve may be located at the cylinder head.

It is understood that the compressor cylinder, or the cylinder bore, may have a compressor-cylinder axis. It is further understood that the compressor piston may be arranged to reciprocate along the compressor-cylinder axis.

It is understood that the compressor piston is arranged to reciprocate within the compressor cylinder when operating the compressor. The compressor piston may have a piston seal arranged to prevent, or inhibit, gas from passing between the compressor piston and the compressor cylinder. It is understood that the compressor cylinder has a cylinder bore and that the compressor piston conforms to the cylinder bore. For example, the cylinder bore may have a circular cross-section.

The compressor cylinder, or the cylinder bore of the compressor cylinder, may have a cylinder diameter. It is understood that the cylinder diameter is perpendicular, or transverse, to the compressor-cylinder axis described above, or parallel. The cylinder diameter may be more than two times, three times, or four times greater than the stroke length of the compressor piston. In other words, the compressor piston may be a short-stroke piston.

The compressor may have an inlet and an outlet, the inlet is arranged to receive gas to the compressor, or air, and the outlet is arranged to expel compressed gas, or air, from the compressor. The compressor may have, or form, an inlet conduit, or inlet duct, arranged to lead gas, or air, from the inlet to the inlet valve. The compressor may have, or form, an outlet conduit, or outlet duct, arranged to lead gas, or air, from the outlet valve to the outlet.

The compressor may have a compressor housing. It is understood that the compressor cylinder may be connected to, or form part of, the compressor housing. It is further understood that the cylinder head may be connected to, or form part of, the compressor housing. The compressor housing may form the inlet and the outlet. The compressor housing may further form the inlet conduit and/or the outlet conduit.

The compressor may comprise a compressor crankshaft that is operationally coupled to the compressor piston. It is understood that the compressor crankshaft is arranged to reciprocate the compressor piston at a rotation of the compressor crankshaft. The compressor may comprise a compressor connecting rod, wherein the compressor connecting rod is rotationally connected to the compressor crankshaft and pivotally connected to the compressor piston. It is further understood that the compressor crankshaft and compressor connecting rod are arranged to convert a rotation of the compressor crankshaft to a reciprocating linear motion of the compressor piston inside the compressor cylinder. For example, the compressor crankshaft may have a crank pin, the compressor may comprise a rod bearing centered on the crank pin, and the compressor connecting rod may be connected to the crank pin via the rod bearing. For example, the rod bearing may be a rolling-element bearing. The compressor may comprise a piston pin that pivotally connects the compressor connecting rod to the compressor piston. It is understood that the compressor crankshaft may have, or form, a counterweight arranged to compensate for the movement of the compressor piston and/or the compressor connecting rod.

It is understood that the compressor crankshaft may be arranged to rotate around a compressor-crankshaft axis. The compressor-cylinder axis and the compressor-crankshaft axis may be perpendicular to one another. It is further understood that the abovementioned crank is spaced apart from the compressor-crankshaft axis.

The compressor housing may form a compressor crankcase, wherein the compressor connecting rod is connected to, or coupled to, the compressor crankshaft inside the compressor crankcase. It is specified above that the compressor housing may have an inlet conduit arranged to lead gas from the inlet to the inlet valve. The compressor crankcase may form part of the inlet conduit. Worded differently, the compressor crankcase may be fluidly connected to the inlet conduit. This allows for the compressor piston to form a partial vacuum in the inlet conduit during a compression stroke, which can contribute to fill the inlet conduit with gas, or air, via the inlet.

It is specified above that the compressor may have a compressor housing. It is understood that the compressor crankshaft may be rotationally supported relative to the compressor housing. For example, the compressor housing may comprise a compressor-crankshaft bearing, such as a rolling-element bearing, that rotationally connects, or rotationally couples, the compressor crankshaft to the compressor housing.

It is specified that the engine has an engine imbalance when operating, the compressor has a compressor imbalance when operating. The engine imbalance may be, or comprise, a primary imbalance and the compressor imbalance may be a primary imbalance. Worded differently, the engine may have an engine primary imbalance, the compressor may have a compressor primary imbalance, and the compressor may be arranged to counteract, or mitigate, the engine primary imbalance by the compressor primary imbalance. A primary imbalance is understood as producing vibrations at the rotational frequency of the engine crankshaft. A primary imbalance is understood as producing vibrations at the rotational frequency of a crankshaft.

Additionally or alternatively, the engine imbalance may be, or comprise, a secondary imbalance and the compressor imbalance may be a secondary imbalance. The engine may have an engine secondary imbalance, the compressor may have a compressor secondary imbalance, and the compressor may be arranged to counteract, or mitigate, the engine secondary imbalance by the compressor secondary imbalance. A secondary imbalance is understood as producing vibrations at twice the rotational frequency of a crankshaft.

The engine may have, or comprise, a first engine piston. The engine may comprise, or have, have a first engine cylinder. It is understood that the first engine piston is located in, or arranged to reciprocate within, the first engine cylinder. The first engine piston may have an engine-cylinder axis. It is understood that the first engine piston is arranged to reciprocate along the engine-cylinder axis of the first engine cylinder. It is understood that an engine-cylinder axis is an abstract entity and that it extends outside of the cylinder it relates to.

The abovementioned engine primary imbalance may be caused by, or at, a reciprocation of the first engine piston, and the compressor primary imbalance may be caused by, or at, a reciprocation of the compressor piston.

The engine may have an engine crankshaft that is operationally coupled to the first engine piston and arranged to rotate at a reciprocation of the first engine piston. It is understood that the engine crankshaft may be arranged to rotate around an engine-crankshaft axis. The engine may comprise a first engine connecting rod, wherein the first engine connecting rod is rotationally connected to the engine crankshaft and pivotally connected to the first engine piston. It is understood that the engine crankshaft may have, or form, a counterweight arranged to compensate for the movement of the first engine piston and/or the first engine connecting rod.

It is understood that the first engine piston may have a bottom dead center and a top dead center. The bottom dead center is the bottommost position of the first engine piston relative to the first engine cylinder, or relative to the engine crankshaft. The top dead center is the topmost position of the first engine piston relative to the first engine cylinder, or relative to the compressor.

The engine may comprise a static engine structure that forms the engine cylinders, and/or encloses the engine pistons. For example, the static engine structure may comprise an engine block, an engine cylinder head, and/or an engine crankcase.

The compressor may be attached to the static engine structure, for example to the engine block, engine cylinder head, and/or engine crankcase. More specifically, the abovementioned compressor housing may be attached to the static engine structure. The features described here contribute to the mitigating effect of the compressor on imbalances of the engine

The compressor may be supported by the engine. The compressor may be fixed relative to the engine. The compressor may be attached to the engine. The compressor may be rigidly attached to the engine, which means that there are no inertia dampeners interconnecting the compressor and the engine. It is understood that the compressor-engine assembly may comprise a compressor support, and the compressor support attaches, or rigidly attaches, the compressor to the engine. The compressor support may be rigid. The compressor support may be arranged to transfer vibrations from the compressor to the engine, and vice versa.

It is specified that the compressor is arranged to be powered, or driven, by the engine. The compressor may be arranged to operate at the same rate as the engine. The compressor crankshaft may be operationally, or rotationally, coupled to the engine crankshaft. The compressor crankshaft may be arranged to rotate at the same rate as the engine crankshaft, for example without any torque conversion between the engine crankshaft and the compressor crankshaft. The compressor crankshaft may be rotationally locked to the engine crankshaft. This means that the compressor crankshaft cannot be disconnected from the engine crankshaft, for example by a cycling clutch.

The compressor-engine assembly may comprise a mechanical connector, or power conveyor, that operationally connects the engine and the compressor, or more specifically the engine crankshaft and the compressor crankshaft. It is understood that the mechanical connector may be arranged to transfer power, or torque, from the engine to the compressor. The compressor crankshaft and the engine crankshaft may be arranged to rotate in the same direction. More specifically, the mechanical connector may be arranged to rotate the compressor crankshaft in the same direction as the engine crankshaft. Alternatively, the compressor crankshaft and the engine crankshaft may be arranged to rotate in opposite directions. More specifically, the mechanical connector may be arranged to rotate the compressor crankshaft in the opposite direction as the engine crankshaft. The mechanical connector may rotationally lock the compressor crankshaft to the engine crankshaft. This means that the compressor crankshaft cannot be disconnected from the engine crankshaft.

For example, the mechanical connector may be, or comprise, a belt or chain arrangement. The belt or chain arrangement may comprise a compressor pulley or sprocket connected to the compressor crankshaft, an engine pulley or sprocket connected to the engine crankshaft, and a belt or roller chain that connects the compressor pulley or sprocket and the engine pulley or sprocket. The compressor pulley or sprocket may be connected directly to the compressor crankshaft and the engine pulley or sprocket may be connected directly to the engine crankshaft. The compressor pulley or sprocket may be fixed to the compressor crankshaft, and the engine pulley or sprocket may be fixed to the engine crankshaft. This means that there is no clutch arrangement between the pulleys or sprockets and the crankshafts, and that the compressor crankshaft is rotationally locked to the engine crankshaft.

Alternatively, the mechanical connector may be, or comprise, a geartrain. The geartrain may comprise a compressor gear connected to the compressor crankshaft and an engine gear connected to the engine crankshaft. The compressor gear may be connected directly to the compressor crankshaft and the engine gear may be connected directly to the engine crankshaft. The compressor gear may be fixed to the compressor crankshaft, and the engine gear may be fixed to the engine crankshaft. This means that there is no clutch arrangement between the gears and the crankshafts. It is specified that the mechanical connector may rotationally lock the compressor crankshaft to the engine crankshaft. For example, the geartrain may be a two-gear geartrain, and the compressor gear may mesh with the engine gear. Alternatively, the geartrain may comprise one or more idler gears that couples and rotationally locks the compressor gear to the engine gear.

The compressor-crankshaft axis and the engine-crankshaft axis may be parallel, or aligned. Worded differently, they may extend in the same direction. This allows for the change in center-of-mass of the compressor connecting rod to compensate the changes in center-of-mass of the first engine connecting rod when operating the compressor-engine assembly.

The compressor may be arranged to mitigate imbalances caused by, or related to, the first engine piston. The compressor may be arranged to mitigate imbalances caused by, or related to, the first engine connecting rod.

It is specified that the first engine cylinder may have an engine-cylinder axis. The compressor-cylinder axis of the compressor cylinder and the engine-cylinder axis of the first engine cylinder may be parallel, or aligned. Worded differently, they may extend in the same direction, or the engine-cylinder axis may be perpendicular to the compressor-crankshaft axis. The compressor-cylinder axis of the compressor cylinder may be located at, or be co-linear with, the engine-cylinder axis of the first engine cylinder. Worded differently, the compressor cylinder may be aligned with the first engine cylinder. More specifically, the compressor-cylinder axis of the compressor cylinder may pass through the first engine piston, or the first engine cylinder, or the engine-cylinder axis of the first engine cylinder may pass through the compressor piston, or the compressor cylinder. This allows for the compressor to primarily mitigate imbalances caused by, or related to, the first engine piston.

The compressor and the engine may be arranged with the compressor crankshaft and the engine crankshaft located between the compressor cylinder and the first engine cylinder. The compressor piston may be arranged to reciprocate in phase with, or without a phase shift relative to, the first engine piston. Worded differently, the compressor piston and the first engine piston may reach top dead center at the same time and bottom dead center at the same time. This primarily allows for compensating for an imbalance caused by the reciprocating first engine piston. In combination with the compressor crankshaft and the engine crankshaft rotating in the same direction, it further allows for an imbalance caused by the engine connecting rod to be compensated. This arrangement typically allows for shorter belt or roller chain connecting the compressor crankshaft and the engine crankshaft. It also allows for a closer positioning of the compressor crankshaft and the balance shaft described below to the engine crankshaft, which may be advantageous in mitigating imbalances of the engine.

Alternatively, the compressor and the engine may be arranged with the compressor cylinder and the first engine cylinder located between the compressor crankshaft and the engine crankshaft. The compressor piston may be arranged to reciprocate in phase with, or without a phase shift relative to, the first engine piston. Worded differently, the compressor piston and the first engine piston may reach top dead center at the same time and bottom dead center at the same time. This primarily allows for compensating for an imbalance caused by the reciprocating first engine piston. In combination with the compressor crankshaft and the engine crankshaft rotating in the same direction, it further allows for an imbalance caused by the engine connecting rod to be compensated.

Alternatively, the compressor and the engine may be arranged with the compressor cylinder and the engine crankshaft located between the compressor crankshaft and the first engine cylinder, or vice versa. The compressor piston may be arranged to reciprocate in anti-phase, or at a 180-degree phase shift, relative to the first engine piston. Worded differently, the compressor piston may reach top dead center at the same time as the first engine piston reaches the bottom dead center, and vice versa. This primarily allows for compensating for an imbalance caused by the reciprocating first engine piston. In combination with the compressor crankshaft and the engine crankshaft rotating in the same direction, it further allows for an imbalance caused by the engine connecting rod to be compensated.

The compressor-engine assembly may comprise a balance shaft, or balance shaft extension, wherein the balance shaft is coupled, or connected, to the compressor crankshaft. Worded differently, the balance shaft is coupled to the engine via the compressor, or more specifically via the compressor crankshaft. More specifically, the compressor piston, or the compressor cylinder, may be located between the balance shaft and the compressor pulley or sprocket. It is understood that the engine as such may have an engine balance shaft that is separate from the balance shaft.

The balance shaft may be arranged to counteract, or mitigate, the vibrations of the engine. Worded differently, the balance shaft may be arranged to at least partly cancel, or reduce, the engine imbalance. More specifically, the engine may have an engine imbalance when operating, the balance shaft may have a balance-shaft imbalance when rotating, and the balance shaft may be arranged with the balance-shaft imbalance at least partly canceling, or mitigating, the engine imbalance. It is understood that the compressor and the balance shaft may be arranged to jointly counteract, or mitigate, the vibrations of the engine.

The balance shaft may be coaxial with the compressor crankshaft. More specifically, the balance shaft may have a balance-shaft axis. It is understood that the balance shaft may be arranged to rotate around the balance-shaft axis when operating the engine. It is specified that the compressor-crankshaft axis and the engine-crankshaft axis of the engine may be parallel, or aligned. Similarly, the balance-shaft axis and the engine-crankshaft axis of the engine may be parallel, or aligned. More specifically, the balance-shaft axis and the compressor-crankshaft axis may be co-axial.

The balance shaft may be rotationally locked to the compressor crankshaft. This means that they rotate at the same rate. The balance shaft may be connected directly to the compressor crankshaft. The compressor crankshaft may form a female interface, such as a socket, and the balance shaft forms a cooperating male interface, that is inserted in the female interface. For example, the balance shaft may be connected to the compressor crankshaft by cooperating splines.

The engine may have, or comprise, a second engine piston. The engine may comprise, or have, have a second engine cylinder. It is understood that the second engine piston is located in, or arranged to reciprocate within, the second engine cylinder. The second engine piston may have an engine-cylinder axis. It is understood that the second engine piston is arranged to reciprocate along the engine-cylinder axis of the second engine cylinder. The engine may comprise a second engine connecting rod, wherein the second engine connecting rod is rotationally connected to the engine crankshaft and pivotally connected to the second engine piston.

The balance shaft may be arranged to mitigate imbalances caused by, or related to, the second engine piston and/or the second engine connecting rod.

The balance shaft may have, or form, a balance-shaft counterweight. It is understood that the counterweight has a center-of-mass that is off-center relative to the balance-shaft axis. The balance-shaft counterweight, or the center-of-mass of the balance-shaft counterweight, may be located at the engine-cylinder axis of the second engine cylinder. Worded differently, the engine-cylinder axis of the second engine cylinder may pass through the balance-shaft counterweight, or the balance-shaft counterweight may be aligned with the second engine cylinder. This allows for the balance shaft to primarily mitigate imbalances caused by the second engine piston.

It is specified that the compressor crankshaft may be rotationally locked to the engine crankshaft and that the balance shaft may be rotationally locked to the compressor crankshaft. The balance shaft may be arranged with the center-of-mass of the balance-shaft counterweight located between the balance-shaft axis and the engine-crankshaft axis when the second engine piston is at bottom dead center, and with the balance-shaft axis located between the counterweight and the engine-crankshaft axis when the second engine piston is at top dead center. This primarily allows for compensating for an imbalance caused by the reciprocating second engine piston.

It is specified above that the engine may comprise a static engine structure. The balance shaft may be rotationally supported relative to the engine, or more specifically relative to the static engine structure. The compressor-engine assembly may comprise a balance-shaft support that is attached to the engine, or the static engine structure, and rotationally supports the balance shaft relative to the engine. For example, the compressor may be attached to the engine block, engine cylinder head, and/or engine crankcase. The compressor support may be arranged to transfer vibrations from the balance shaft to the engine, and vice versa. The balance-shaft support may comprise a balance-shaft bearing, such as a rolling-element bearing, that rotationally connects, or rotationally couples, the balance shaft to the balance-shaft support.

The first engine cylinder may be the only cylinder of the engine. Worded differently, the engine may be single-cylinder engine. Alternatively, the engine may comprise additional engine cylinders. Worded differently, the engine may be a multi-cylinder engine. More specifically, the engine may have, or comprise, a plurality of engine pistons and a plurality of engine cylinders. It is understood that an engine piston is located in, or arranged to reciprocate within, respective engine cylinder. Each engine cylinder may have an engine-cylinder axis. It is understood that each engine piston is arranged to reciprocate along the engine-cylinder axis of the engine cylinder it is located in. It is further understood that the plurality of engine pistons may comprise, or include, the abovementioned first engine piston and/or second engine piston, and that the plurality of engine cylinders may comprise, or include, the abovementioned first engine cylinder and/or second engine cylinder.

The engine may have an engine crankshaft that is operationally coupled to the engine pistons and arranged to rotate at a reciprocation of the engine pistons. It is understood that the engine crankshaft may be arranged to rotate around an engine crankshaft axis. The engine may comprise a plurality of engine connecting rods, wherein each engine connecting rod is rotationally connected to the engine crankshaft and pivotally connected to one of the engine pistons. It is understood that each engine piston is connected to a single engine connecting rod. It is further understood that the plurality of connecting rods may comprise, or include, the abovementioned first engine connecting rod and/or second connecting rod. It is understood that the engine crankshaft may have, or form, counterweights arranged to compensate for the movement of the engine pistons and/or the engine connecting rods.

It is understood that each engine piston may have a bottom dead center and a top dead center. The bottom dead center is the bottommost position of the engine piston relative to the engine cylinder it is located in, or relative to the engine crankshaft. The top dead center is the topmost position of the engine piston relative to the engine cylinder it is located in, or relative to the compressor.

The compressor and the engine may be arranged with the compressor crankshaft and the engine crankshaft located between the compressor cylinder and the one or more engine cylinders. Alternatively, the compressor and the engine may be arranged with the compressor cylinder and the one or more engine cylinders located between the compressor crankshaft and the engine crankshaft. Alternatively, the compressor and the engine may be arranged with the compressor cylinder and the engine crankshaft located between the compressor crankshaft and the one or more engine cylinders, or vice versa.

The engine may be a straight engine. More specially, the engine-cylinder axes may be parallel and the engine cylinders may be located on the same side of the engine crankshaft. The engine may have an odd number of cylinders. It is understood that the cylinders of the straight engine are arranged in a row. For example, the engine may be a straight three-cylinder engine, or a straight-three engine. The three-cylinder engine may have a 120° design, or a 120° separation between crank pins. Alternatively, the engine may be a straight five-cylinder engine, or a straight-five engine. The five-cylinder engine may have a 72° design, or a 72° separation between crank pins.

It is understood that the engine cylinders may be arranged in a row of cylinders. The one or more engine cylinders may comprise a center engine cylinder, and the one or more engine pistons may comprise a center engine piston located in the center engine cylinder. The one or more engine connecting rods may comprise a center engine connecting rod that is rotationally connected to the engine crankshaft and pivotally connected to center engine piston. It is understood that the center engine cylinder is at the center of the row of cylinders.

It is specified that the one or more engine cylinders may comprise a first engine cylinder and a second engine cylinder. The first engine cylinder may be the first cylinder in the row of cylinders and the second engine cylinder may be the last cylinder in the row of cylinders. For example, in the straight three-cylinder engine, this means that the first engine cylinder, center engine cylinder, and the second engine cylinder are arranged sequentially in the row of cylinders.

The engine may generate a couple, or rocking, relative to the center engine cylinder, or the center engine piston, when operating. It is understood that the couple may be caused by, or relate to, asymmetries in the movement of the other engine pistons than the center engine piston, for example the first engine piston and the second engine piston in the straight three-cylinder engine. Additionally or alternatively, the couple may be caused by, or relate to, asymmetries in the movement of the other engine connecting rods than the center engine connecting rod, for example the first engine connecting rod and the second engine connecting rod in the straight three-cylinder engine The compressor may be arranged to at least partly cancel, or mitigate, the couple. Similarly, the balance shaft may be arranged to at least partly cancel, or mitigate, the couple. If arranged as described above, the compressor and the balance shaft jointly contribute to at least partly reduce, or mitigate, the couple.

It is specified above that the compressor may have a compressor imbalance and that the balance shaft may have a balance-shaft imbalance. The compressor may be arranged such that the compressor imbalance at least partly cancels, or mitigates, the couple. The balance shaft may be arranged such that the balance-shaft imbalance at least partly cancels, or mitigates, the couple. More specifically, the compressor and the balance shaft may be arranged to jointly at least partly cancel, or mitigate, the couple.

### BRIEF DESCRIPTION OF THE DRAWINGS

A more complete understanding of the abovementioned and other features and advantages of the proposed technology will be apparent from the following detailed description of preferred embodiments of the proposed technology in conjunction with the appended drawings, wherein:
**Fig. 1** is a schematic view of an embodiment of a compressor-engine assembly including a compressor and a reciprocating engine.
**Fig. 2** is a schematic view of another embodiment of a compressor-engine assembly including a compressor and a reciprocating engine.
**Fig. 3** is a schematic view of another embodiment of a compressor-engine assembly including a compressor and a reciprocating engine.
**Fig. 4** is a schematic view of another embodiment of a compressor-engine assembly including a compressor and a reciprocating engine.

### DETAILED DESCRIPTION OF THE DRAWINGS

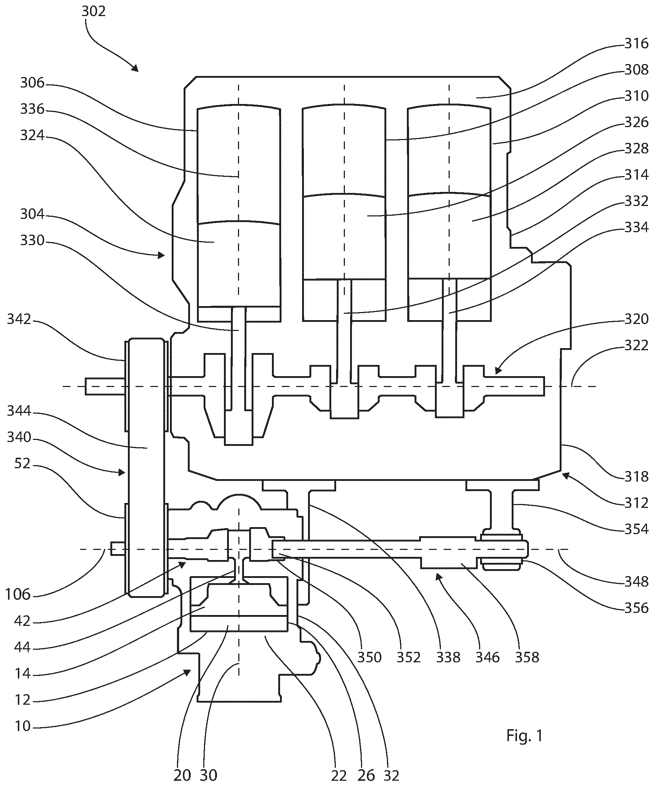

A schematic view of an embodiment of a compressor-engine assembly 302 is shown in **Fig.** 1. The assembly 302 includes a compressor 10 and a reciprocating internal combustion engine 304 with the compressor 10 arranged to be powered by the engine 304.

The compressor 10 is a single acting and single stage compressor. The compressor 10 has a single compressor cylinder 12, a single compressor piston 14, an inlet valve (not shown), and an outlet valve (not shown). The compressor cylinder 12 and the compressor piston 14 jointly form a compression chamber 20 that can compress gas when the compressor 10 is operated. The compressor cylinder 12 has a cylinder head 22 that partly encloses the compression chamber 20. The inlet valves and the outlet valve are located at the cylinder head 22.

The compressor piston 14 is arranged to reciprocate within the compressor cylinder 12 when the compressor 10 is operated. The compressor cylinder 12 has a cylinder bore 26 with a circular cross-section and the compressor piston 14 conforms to the cylinder bore 26. The compressor piston 14 has a piston seal (not shown) arranged to prevent gas from passing between the compressor piston 14 and the compressor cylinder 12. The cylinder bore 26 of the compressor cylinder 12 has a compressor-cylinder axis 30 along which the compressor piston 14 can reciprocate.

The compressor piston 14 has a bottom dead center and a top dead center. The compressor piston 14 moves towards the cylinder head 22 at a transition of the compressor piston 14 from the bottom dead center to the top dead center, and away from the cylinder head 22 at a transition of the compressor piston 14 from the top dead center to the bottom dead center. It further has a stroke length between the bottom dead center and the top dead center. It can perform a compression stroke corresponding to a change in position of the compressor piston 14 from the bottom dead center to the top dead center. The volume of the compression chamber 20 changes when the compressor 10 is operated, and the volume of the compression chamber 20 is the largest with the compressor piston 14 the bottom dead center and the smallest at the top dead center.

The compressor 10 has a compressor housing 32 and the compressor cylinder 12 and the cylinder head 22 form part of the compressor housing 32. The compressor housing 32 forms an inlet (not shown) and an outlet (not shown) of the compressor 10 by which the compressor 10 can receive respectively expel gas. The compressor housing 32 also forms an inlet conduit (not shown) that can lead gas from the inlet to the inlet valve and an outlet conduit (not shown) that can lead gas from the outlet valve to the outlet.

The compressor 10 has a compressor crankshaft 42 that is operationally connected to the compressor piston 14 and can reciprocate the compressor piston 14. A compressor connecting rod 44 is rotationally connected to the compressor crankshaft 42 and pivotally connected to the compressor piston 14. The compressor crankshaft 42 has a crank pin (not shown) and the compressor connecting rod 44 is connected to the crank pin via a rod bearing (not shown). The compressor connecting rod 44 is connected to the compressor piston 14 via a piston pin (not shown). The compressor housing 32 has a compressor-crankshaft bearing (not shown) in the form of a rolling-element bearing that rotationally connects the compressor crankshaft 42 to the compressor housing 32. This way, the compressor crankshaft 42 can rotate around a compressor-crankshaft axis 106. The compressor housing 32 forms a compressor crankcase (not indicated) within which the compressor connecting rod 44 is connected to the compressor crankshaft 42.

The engine 304 is a straight three-cylinder engine with a 120° separation between crank pins. In alternative embodiments, the number of cylinders and/or the architecture of the engine 304 is different. The engine 304 has a first engine cylinder 306, a center engine cylinder 308, and a second engine cylinder 310 arranged in a row of cylinders with the center engine cylinder 308 located at the center between the first engine cylinder 306 and the second engine cylinder 310. The engine has a static engine structure 312 that includes an engine block 314 that forms the engine cylinders 306, 308, and 310, an engine cylinder head 316, and engine crank case 318.

The engine 304 has an engine crankshaft 320 that can rotate around an engine-crankshaft axis 322 relative to the static engine structure 312. The engine 304 has a first engine piston 324 located in the first engine cylinder 306 and a first engine connecting rod 330 that is pivotally connected to first engine piston 324 and rotationally connected to the engine crankshaft 320. The engine 304 further has a center engine piston 326 located in the center engine cylinder 308 and a center engine connecting rod 332 that is pivotally connected to center engine piston 326 and rotationally connected to the engine crankshaft 320. The engine 304 further has a second engine piston 328 located in the second engine cylinder 310 and a second engine connecting rod 334 that is pivotally connected to second engine piston 328 and rotationally connected to the engine crankshaft 320. Each engine cylinder 306, 308, and 310 has an engine-cylinder axis 336 and each engine piston 324, 326, 328 can reciprocate along the engine-cylinder axis 336 of respective engine cylinder 306, 308, and 310. This way, the engine 304 has an engine crankshaft 320 that is operationally connected to the engine pistons and can rotate at a reciprocation of the engine pistons 324, 326, 328.

The compressor-engine assembly 302 has a compressor support 338 by which the compressor housing 32 of the compressor 10 is rigidly attached to the static engine structure 312 of the engine 304. This way, the compressor support 338 can transfer vibrations from the compressor 10 to the engine 304, and vice versa.

The compressor-engine assembly 302 has a mechanical connector 340 in the form of a belt arrangement that is arranged to transfer power from the engine 304 to the compressor 10. The mechanical connector 340 has a compressor pulley 52 that is fixed to the compressor crankshaft 42 and forms part of the belt arrangement 340. Additionally, the mechanical connector 340 has an engine pulley 342 fixed to the engine crankshaft 320 and a belt 344 that connects the compressor pulley 52 and the engine pulley 342. The compressor pulley 52 is connected directly to the compressor crankshaft 42, and the engine pulley 342 is connected directly to and fixed to the engine crankshaft 320. This way, the compressor crankshaft 42 is operationally coupled and rotationally locked to the engine crankshaft 320, and the compressor 10 is arranged to be powered by the engine 304. In operation, the compressor crankshaft 42 and the engine crankshaft 320 rotate in the same direction. The compressor pulley 52 and the engine pulley 342 have the same diameter. This way, the compressor crankshaft 42 is arranged to rotate at the same rate and in the same direction as the engine crankshaft 320. In an alternative embodiment, instead of the belt arrangement 340, the compressor-engine assembly 302 has a chain arrangement with a compressor sprocket and an engine sprocket that are connected by a roller chain. Alternatively, the compressor-engine assembly 302 has a geartrain that is arranged to transfer power from the engine 304 to the compressor 10. The geartrain may have an idler gear arranged to rotate the compressor crankshaft 42 and the engine crankshaft 320 in opposite directions.

The compressor-crankshaft axis 106 and the engine-crankshaft axis 322 of the engine are parallel. The compressor-cylinder axis 30 of the compressor cylinder 12 and the engine-cylinder axis 336 of the first engine cylinder 306 are essentially parallel, and the compressor-cylinder axis 30 is located at the engine-cylinder axis 336 with the compressor-cylinder axis 30 passing through the first engine piston 324. This way, the compressor cylinder 12 is aligned with the first engine cylinder 306. The compressor crankshaft 42 and the engine crankshaft 320 are located between the compressor cylinder 12 and the first engine cylinder 306, as can be seen in **Fig. 1****.** The compressor piston 14 is arranged to reciprocate in phase relative to the first engine piston 324, with the compressor piston 14 and the first engine piston 324 reaching top dead center at the same time and the bottom dead center at the same time.

The compressor housing 32 has an opening (not indicated) centered on the compressor-crankshaft axis 106 located on the opposite side of the housing 32 relative to the compressor pulley 52, and the compressor crankshaft 42 can be accessed through the opening. The compressor-engine assembly 302 has a balance shaft 346 that is connected to the compressor crankshaft 42 via the opening. The balance shaft 346 is coupled to the engine 304 via the compressor crankshaft 42. The balance shaft 346 is coaxial with the compressor crankshaft 42. It has a balance-shaft axis 348 that is co-linear with the compressor-crankshaft axis 106 around which it can rotate. This means that the balance-shaft axis 348 and the engine-crankshaft axis 322 are parallel. The compressor crankshaft 42 forms a female interface 350 and the balance shaft 346 forms a cooperating male interface 352 that is inserted in the female interface 350. This way, the balance shaft 346 is rotationally locked to and rotate at the same rate as the compressor crankshaft 42, and in extensions at the same rate as the engine crankshaft 320.

The compressor-engine assembly 302 has a balance-shaft support 354 that is attached to the static engine structure 312 and rotationally supports the balance shaft 346 relative to the engine 304. The balance-shaft support 354 has a balance-shaft bearing 356 in the form of a rolling-element bearing that rotationally connects the balance shaft 346 to the balance-shaft support 354. This way, the compressor support 338 is arranged to transfer vibrations from the balance shaft 346 to the engine 304, and vice versa.

The balance shaft 346 forms a counterweight 358 having a center-of-mass that is off-center relative to the balance-shaft axis 348. The counterweight 358 is located at the engine-cylinder axis 336 of the second engine cylinder 310. This way, the counterweight 358 is aligned with the second engine cylinder 310. The balance shaft 346 is arranged with the center-of-mass of the counterweight 358 located between the balance-shaft axis 348 and the engine-crankshaft axis 322 when the second engine piston 328 is at bottom dead center, and the balance-shaft axis 348 located between the counterweight 358 and the engine-crankshaft axis 322 when the second engine piston 328 is at top dead center.

When operating the engine 304, the first engine piston 324 and the second engine piston 328 generate a couple relative to the center engine cylinder 308 that is caused by asymmetries in the movements of the first engine piston 324 and the second engine piston 328. With the compressor 10 and the balance shaft 346 arranged as described here, they jointly contribute to reduce the couple with the compressor 10 and the balance shaft 346 mitigating imbalances caused by the first engine piston 324 and the second engine piston 328, and by the first connecting rod and the second connecting rod. On a more general level, the engine 304 has an engine imbalance when operating, the compressor 10 has a compressor imbalance when operating, and the balance shaft 346 has a balance-shaft imbalance when rotating. The compressor 10 and the balance shaft 346 are arranged such that the compressor imbalance and the balance-shaft imbalance jointly mitigate the engine imbalance.

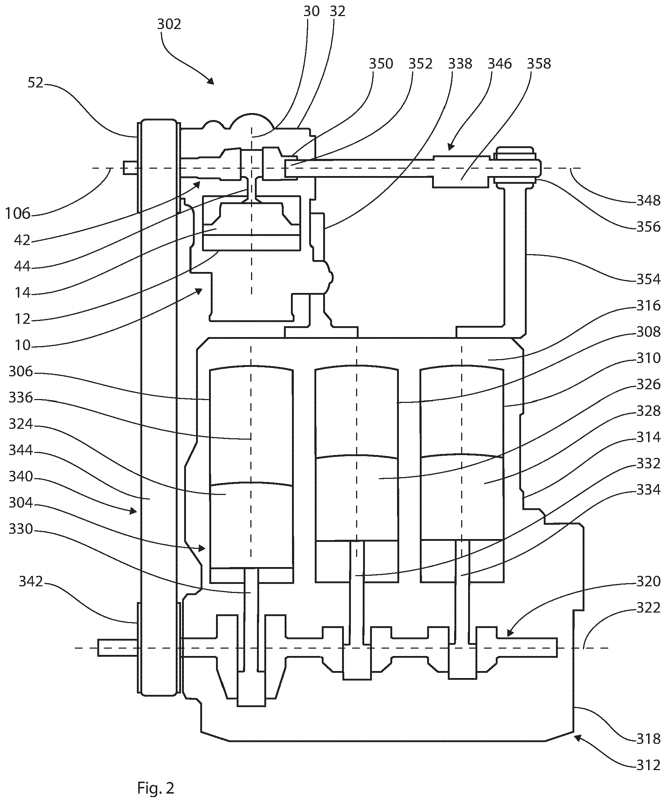

A schematic view of an alternative embodiment of a compressor-engine assembly 302 is shown in **Fig. 2****.** It differs from the embodiment of Fig. 1 in that the compressor 10 and the engine 304 are arranged with the compressor cylinder 12 and the first engine cylinder 306 located between the compressor crankshaft 42 and the engine crankshaft 320. The compressor piston 14 is arranged to reciprocate in phase relative to the first engine piston 324, as in the embodiment of **Fig. 1****.**

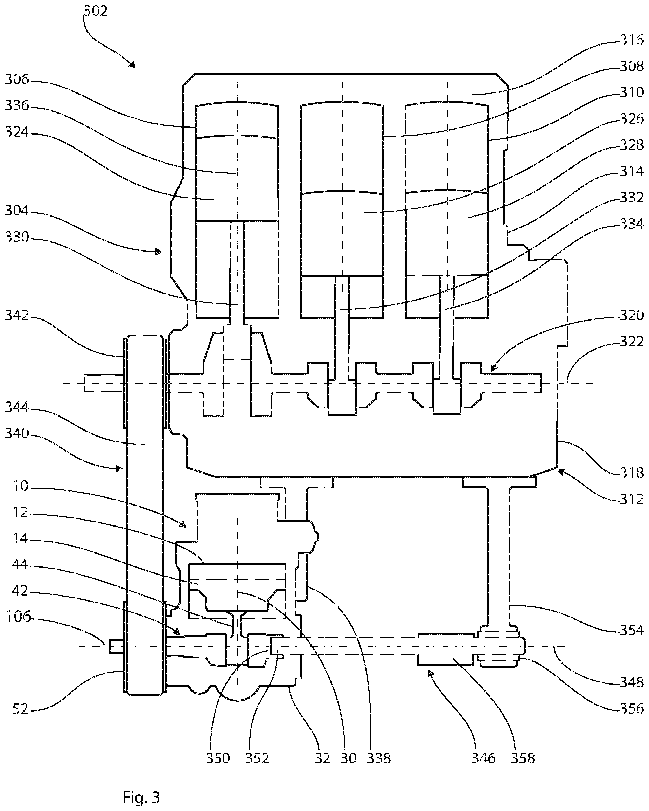

A schematic view of an alternative embodiment of a compressor-engine assembly 302 is shown in **Fig. 3****.** It differs from the embodiment of **Fig. 1** in that the compressor 10 and the engine 304 are arranged with the compressor cylinder 12 and the engine crankshaft 320 located between the compressor crankshaft 42 and the first engine cylinder 306. The compressor piston 14 is arranged to reciprocate in anti-phase relative to the first engine piston 324 such that the compressor piston 14 reaches top dead center at the same time as the first engine piston 324 reaches bottom dead center, and vice versa.

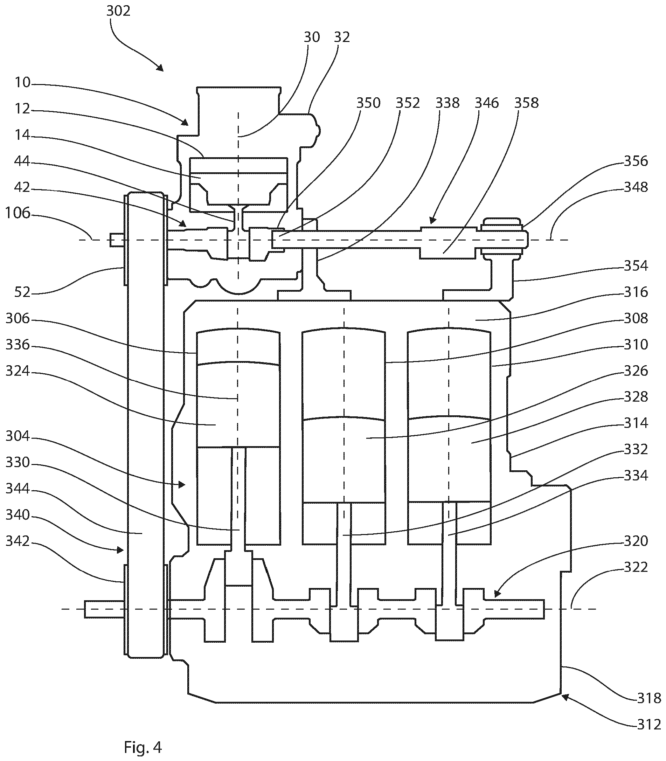

A schematic view of an alternative embodiment of a compressor-engine assembly 302 is shown in **Fig. 4****.** It differs from the embodiment of Fig. 1 in that the compressor 10 and the engine 304 are arranged with the compressor crankshaft 42 and the first engine cylinder 306 located between the compressor cylinder 12 and the engine crankshaft 320. The compressor piston 14 is arranged to reciprocate in anti-phase relative to the first engine piston 324, as in the embodiment of Fig. 3.

### ITEM LIST

10 compressor
12 compressor cylinder
14 compressor piston
16 inlet valve
18 outlet valve
20 compression chamber
22 cylinder head
24 top-cylinder face
26 cylinder bore
28 piston seal
30 compressor-cylinder axis
32 compressor housing
34 inlet
36 outlet
38 inlet conduit
40 outlet conduit
42 compressor crankshaft
44 compressor connecting rod
46 crank pin
48 rod bearing
50 piston pin
52 compressor pulley
54 compressor-crankshaft bearing
56 compressor crankcase
106 compressor-crankshaft axis
302 compressor-engine assembly
304 engine
306 first engine cylinder
308 center engine cylinder
310 second engine cylinder
312 static engine structure
314 engine block
316 engine cylinder head
318 engine crank case
320 engine crankshaft
322 engine-crankshaft axis
324 first engine piston
326 center engine piston
328 second engine piston
330 first engine connecting rod
332 center engine connecting rod
334 second engine connecting rod
336 engine-cylinder axis
338 compressor support
340 mechanical connector
342 engine pulley
344 belt
346 balance shaft
348 balance-shaft axis
350 female interface
352 male interface
354 balance-shaft support
356 balance-shaft bearing
358 counterweight

## Claims

1. A compressor-engine assembly (302) that comprises:
- a compressor (10), and
- a reciprocating engine (304), wherein
the compressor (10) is arranged to be powered by the engine (304), the engine (304) has an engine imbalance when operating, the compressor (10) has a compressor imbalance when operating, and the compressor (10) is arranged with the compressor imbalance at least partly mitigating the engine imbalance.

2. The compressor-engine assembly (302) according to claim 1, wherein the engine (304) has an engine primary imbalance, the compressor (10) has a compressor primary imbalance, and the compressor (10) is arranged to counteract the engine primary imbalance by the compressor primary imbalance.

3. The compressor-engine assembly (302) according to claim 1 or 2, wherein the compressor (10) is arranged to operate at the same rate as the engine (304).

4. The compressor-engine assembly (302) according to any of the claims 1 to 3, wherein the compressor (10) comprises: a compressor piston (14) and a compressor crankshaft (42), the compressor crankshaft (42) is operationally coupled to the compressor piston (14) and arranged to reciprocate the compressor piston (14) at a rotation of the compressor crankshaft (42), the engine (304) has a first engine piston (324) and an engine crankshaft (320), the engine crankshaft (320) is operationally coupled to the first engine piston (324) and arranged to rotate at a reciprocation of the first engine piston (324), the compressor crankshaft (42) is arranged to rotate around a compressor crankshaft axis (106), the engine crankshaft (320) is arranged to rotate around an engine crankshaft axis (322), and the compressor crankshaft axis (106) and the engine crankshaft (320) axis are parallel.

5. The compressor-engine assembly (302) according to any of the claims 1 to 4, wherein the compressor comprises: a compressor cylinder (12) that has a compressor-cylinder axis (30), the engine (304) comprises a first engine cylinder (306) that has an engine-cylinder axis (336), and the compressor-cylinder axis (30) and the engine-cylinder axis (336) are parallel.

6. The compressor-engine assembly (302) according to claim 4 and 5, wherein the engine (304) is arranged with the compressor crankshaft (42) and the engine crankshaft (320) located between the compressor cylinder (12) and the first engine cylinder (306).

7. The compressor-engine assembly (302) according to claim 6, wherein the compressor piston (14) is arranged to reciprocate in phase with the first engine piston (324).

8. The compressor-engine assembly (302) according to any of the claims 1 to 8, wherein the compressor (10) is supported by the engine (304).

9. The compressor-engine assembly (302) according claim 8, wherein the compressor-engine assembly (302) comprises a compressor support that rigidly attaches the compressor (10) to the engine (304).

10. The compressor-engine assembly (302) according to any of the claims 1 to 3, wherein the compressor (10) comprises: a compressor crankshaft (42), the compressor-engine assembly (302) comprises: a balance shaft (346), the balance shaft (346) is coupled to the compressor crankshaft (42), the balance shaft (346) has a balance-shaft imbalance when rotating, and the balance shaft (346) is arranged with the balance-shaft imbalance at least partly mitigating the engine imbalance.

11. The compressor-engine assembly (302) according to claim 10, wherein the balance shaft (346) is rotationally locked to the compressor crankshaft (42).

12. The compressor-engine assembly (302) according to claim 10 or 11, wherein the balance shaft (346) is coaxial with the compressor crankshaft (42).

13. The compressor-engine assembly (302) according to any of the claims 10 to 12, wherein the compressor-engine assembly (302) comprise: a balance-shaft support (354) that is attached to the engine (304) and rotationally supports the balance shaft (346) relative to the engine (304).

14. The compressor-engine assembly (302) according to any of the claims 1 to 13, wherein the engine (304) is a straight engine having an odd number of cylinders (306, 308, 310).

15. A vehicle that comprises the compressor-engine assembly (302) according to any of the claims 1 to 14.
